# EUROPEAN PATENT SPECIFICATION

(11) **EP 2 491 326 B1**
(45) Date of publication and mention of the grant of the patent: **26.12.2018**
(21) Application number: 10787895.1
(22) Date of filing: 21.10.2010
(51) Int. Cl.: F24H 1/40, F24H 8/00, F28D 7/16, F28F 9/00, F28F 9/02, F28F 21/08

(54) **IMPROVEMENTS TO A HEAT-EXCHANGER FOR A BOILER**
VERBESSERUNGEN AN EINEM WÄRMETAUSCHER FÜR EINEN HEIZKESSEL
AMÉLIORATIONS APPORTÉES À UN ÉCHANGEUR DE CHALEUR POUR CHAUDIÈRE

(30) Priority: 21.10.2009 IT RN20090013 U; 07.06.2010 IT BO20100060 U
(43) Date of publication of application: 29.08.2012
(73) Proprietor: Valmex S.p.A., 61030 Lucrezia di Cartoceto (PU) (IT)
(72) Inventor: CAPODAGLI, Severino, I-61032 Fano (PU) (IT)
(74) Representative: Provvisionato, Paolo
(86) International application number: PCT/IB2010/054785
(87) International publication number: WO 2011/048574

(56) References cited:
- EP-A1- 0 687 870
- EP-A1- 1 243 866
- EP-A2- 1 026 454
- WO-A1-2006/097959
- DE-A1-102005 054 043
- GB-A- 2 231 130
- US-A1- 2002 160 220
- US-A1- 2008 061 160

## Description

The present invention relates to the field of heat-exchangers for boilers.

The invention was developed with particular, although not limitative, regard to a heat-exchanger for use in a boiler termed a condensing boiler, but may usefully be used also in heat-exchangers of a different type which employ bundles of parallel tubes within which flows the fluid to be heated, normally water. The invention further relates to a semi-finished assembly for constructing a heat-exchanger for boilers.

Heat-exchangers generally comprise one or more tubes which are lapped by the hot combustion fumes produced by a burner, and within which flows a fluid to be heated, generally water. A common type of exchanger comprises a bundle of tubes parallel to one another and connected to one another by manifolds provided in headers placed at the ends of the tubes. The water enters the tube bundle at low temperature from an inlet opening and is distributed into one or more tubes. In the manifolds on the headers, the water reverses the direction of flow and enters other tubes, thus heating up gradually before leaving at the desired operating temperature from an outlet opening.

A heat-exchanger is known, e.g. by US 2008/0061160, EP 1 026 454 A2, or GB 2 231 130 A, which comprises a tube bundle in which a fluid to be heated circulates, and a casing which at least partly surrounds a space in which the tube bundle is placed. The casing comprises a peripheral frame defining an opening for access to said space, said frame comprising a plurality of sides. Through said opening, hot fumes coming from a heating burner enter the casing.

For the purpose of efficiency and effective operation of the exchanger, and therefore of the entire boiler, it is important that the flow of water which flows through several tubes in parallel is substantially balanced, in order to avoid damaging overheating of the water in the tube with a lower flow rate. This aspect is all the more important the higher the temperature of the combustion fumes which lap the tubes within which the water flows, and the higher the temperature of the water which flows in the tubes themselves. The most critical case is that of exchangers in counterflow, in the tubes nearest to the burner, but of course the problem cannot be ignored even in the zones in which the combustion fumes and the fluid to be heated are at the lower temperatures.

According to an embodiment of the present invention, it is intended to provide an improved heat exchanger, in which the flow of fluid to be heated in parallel tubes is substantially balanced, so as to improve the efficiency of the exchanger and therefore of the boiler in which it is employed. In addition, the present invention makes it possible to construct a heat exchanger which is economical, efficient, practical to manufacture and which does not require particular maintenance in operation. The present invention in addition provides a semi-finished assembly for constructing a heat exchanger for boilers which is capable of improving the fluid dynamic seal of the incoming hot fumes, at the same time containing the construction costs. The exchanger obtainable from such a semi-finished assembly also enables a better efficiency to be obtained.

In order to achieve the aims indicated above, the subject of the invention is a semi-finished assembly comprising the technical features disclosed in the following claims. A heat exchanger according to the invention is also defined according to the related claims which follow. The invention also has as its subject a method for the manufacture of a heat exchanger.

Further features and advantages will become clear from the following detailed description of preferred forms of embodiment of the invention, with reference to the appended drawings, which are provided purely by way of non-limiting example, wherein:

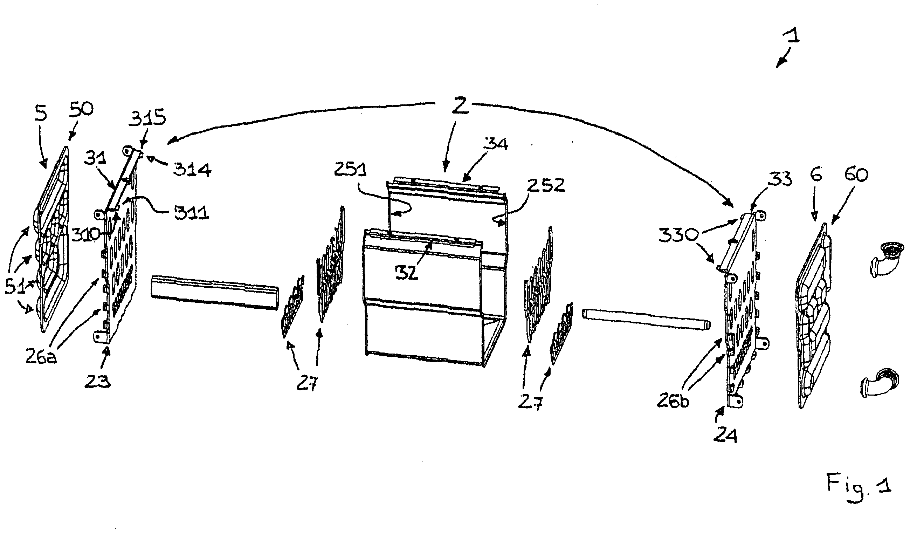

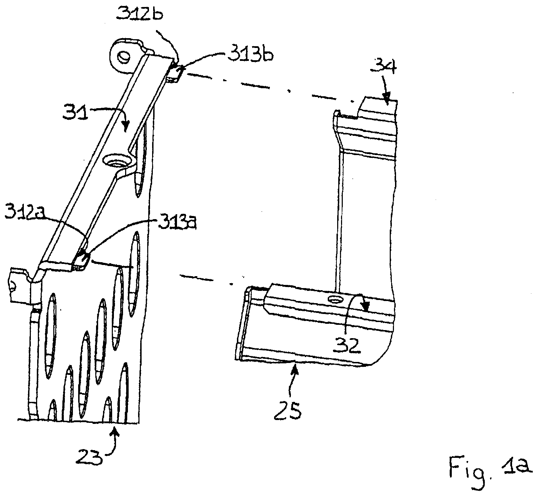

- Figure 1 is an exploded view of a heat exchanger or assembly according to the present invention;

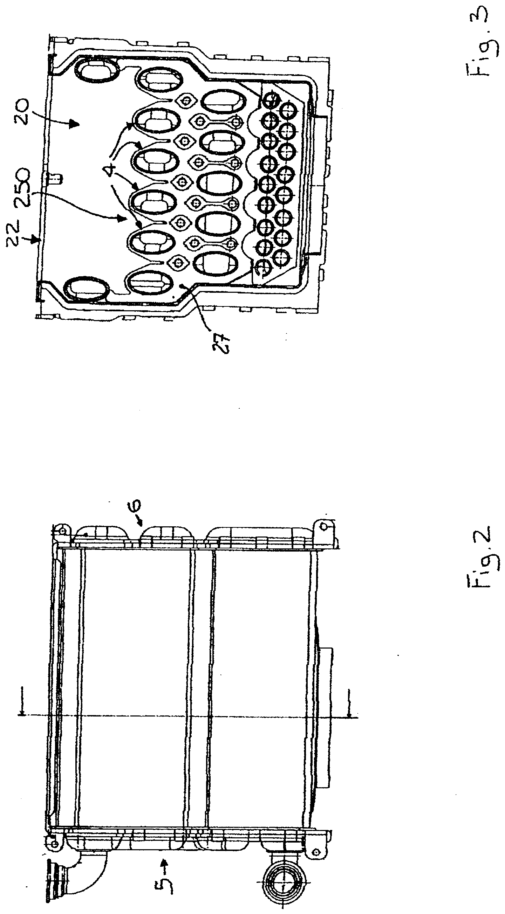

- Figure 2 is a side view of the exchanger of Figure 1,
- Figure 3 is a view in section along the line III-III of Figure 2,

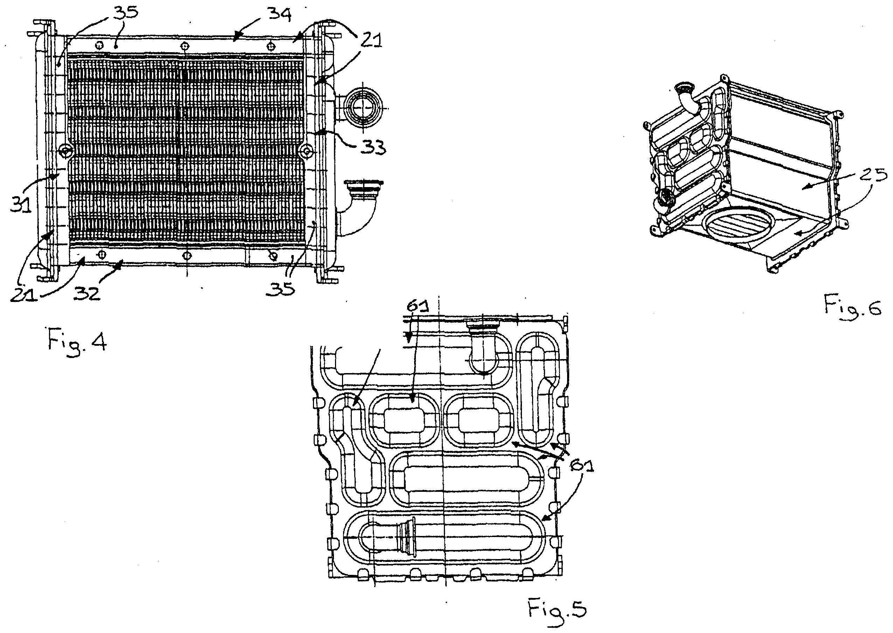

- Figures 4, 5 and 6 are respectively top, front and perspective views of the exchanger of Figure 1, and
- Figures 7 and 8 are perspective and enlarged views of the two sheets which form the headers of the heat exchanger of Figure 1, and which are seen from the side facing towards the inside of the exchanger structure.

With reference to the drawings, the reference number 1 indicates a semi-finished assembly for constructing a heat exchanger for boilers. The semi-finished assembly comprises:
i) a tube bundle 4 for permitting the passage of a fluid to be heated; advantageously, at least a plurality of the tubes of the tube bundle 4 are finned (see elements 27);
ii) a casing 2 which at least partly surrounds a space 20 in which the tube bundle 4 is placed and comprising a peripheral frame 21 defining an opening 22 for access to said space 20. The frame 21 comprises a plurality of sides. The access opening 22 expediently permits the at least partial insertion inside the space 20 of a burner or of flames and/or fumes generated by it.

The plurality of sides comprises at least a first and a second side 31, 32 which are consecutive and provided on separate bodies. The first side 31 comprises a first protuberance 310 which is in contact with and is superimposed on the second side 32.

The first side 31 and/or the second side 32 is/are made of aluminium or of aluminium alloy with a coating of brazing material. This makes it possible to improve the mutual contact of two edges of the first and the second side 31, 32 in a subsequent step of furnace brazing. It is very important that in the finished exchanger the frame 21 is as far as possible without gaps so as to avoid any escape of the fumes generated by the burner. Possibly, a one-piece flange could also be placed above the frame 21 obtained by the combination of several bodies.

An example of a brazing substance to which reference may be made in the course of the present treatment is an aluminium alloy such as A14045 or A14043. Preferably, the brazing substance involves a percentage thickness greater than or equal to 5% and less than or equal to 10%.

Each pair of consecutive sides of said frame 21 comprises two sides provided on separate bodies.

Said plurality of sides comprises four sides, and at least two non-consecutive sides of said opening 22 are made of aluminium or aluminium alloy, coated with a brazing alloy. Advantageously, this makes it possible to connect all the sides of the frame 21 during the subsequent furnace brazing. Preferably, all the sides of the frame 21 are made of aluminium or aluminium alloy, coated with a brazing substance.

At least one side of said plurality of sides, at two of its ends, is in contact with and is superimposed with another two sides of said plurality of sides.

Each side of said plurality of sides, at two of its ends, is in contact with and is superimposed with another two sides of said plurality of sides. In this way, there is good contact between two consecutive sides. With the subsequent brazing, all the sides of the frame 21 will become a single body, minimising the risk of the formation of cracks at the interface between one side and the other.

The first protuberance 310 of the first side 31 extends away from the remaining parts of the first side 31, defining a first step 311. The elevation 312a of said first step 311 is abutted by the second side 32, the tread 313a of said first step 311 being in contact with the second side 32. This arrangement also makes it possible to improve the contact surfaces between the first and the second side 31, 32.

The first side 31 comprises a second protuberance 314 which is in contact with and is superimposed on another side of said plurality of sides.

In the preferred solution, the first and/or the second protuberance 310, 314 of the first side 31 extend/extends transversely to the direction of predominant extension of the first side 31.

The casing 2 expediently comprises:
- a first and a second plate 23, 24 which are opposed and between which said tube bundle 4 at least partly extends;
- a web 25 which connects the first and the second plate 23, 24, forming a concavity 250 and which, in combination with the first and the second plate 23, 24, at least partly surrounds said space 20.

The web 25 comprises a plurality of sections which are attachable to one another or (preferred solution) is made in one piece. The tube bundle 4 is housed in the concavity 250.

The plurality of sides comprises, and preferably coincides with, the first, the second, a third, and a fourth side 31, 32, 33, 34. Two of the sides are provided on opposite ends of said web 25 and are opposed to each other. The other two sides are integral respectively with the first and the second plate 23, 24.

The third side is opposed to the first side 31 (said opening 22 is therefore interposed between the first and the third side 31, 33) and comprises two protuberances 330 which are in contact with and are superimposed respectively on two of the other sides. The protuberances 330 of the third side 33 extend transversely to the direction of predominant extension of the third side 33.

Advantageously, the first side 31 is integral with the first plate 23. In particular, the first side 31 is provided in one piece with the first plate 23.

The first side 31 extends cantilevered from the remaining parts of the first plate 23 towards the inside of the opening 22.

The third side 33 is integral with the second plate 24. Preferably, the third side 33 is in one piece with the second plate 24.

The third side 33 extends cantilevered from the remaining parts of the second plate 24 towards the inside of the opening 22.

The second and the fourth side 32, 34 are on the other hand at the opposite ends of said web 25. Said second side 32, said fourth side 34 and said web 25 are in one piece.

The second side 32 expediently extends cantilevered from the remaining parts of the web 25 towards the outside of the opening 22.

The fourth side 34 expediently extends cantilevered from the remaining parts of the web 25 towards the outside of the opening 22.

Advantageously, the second protuberance 314 is shaped in a very similar manner to the first protuberance 310.

The second protuberance 314 of the first side 31 expediently extends cantilevered from the remaining parts of the first side 31, defining a second step 315, the elevation 312b of said second step 315 being abutted by the fourth side 34, the tread 313b of said second step 315 being in contact with the fourth side 34.

The sides constituting said frame 21 define in combination with one another a coplanar surface which surrounds the opening 22 and faces towards the outside of the assembly. This is important for improving the sealing of the fumes, since the frame 21 normally defines a flange for connection to the burner.

Advantageously, the tube bundle 4 comprises a plurality of tubes the two ends of which are attached respectively to said first and to said second plate 23, 24.

Advantageously, the first plate 23 has a plurality of holes which pass completely through its thickness and into which fit the ends of at least some tubes of the tube bundle 4. Similarly, the second plate 24 has a plurality of holes which pass completely through its thickness and into which fit the ends of at least some tubes of the tube bundle 4.

Advantageously, said assembly 1 comprises first manifold means 5, said first plate 23 being interposed between said first manifold means 5 and said space 20.

Said first manifold means 5 expediently comprise a first piece 50 of sheet metal. Said first manifold means 5 make it possible to place in communication with each other at least some tubes of said tube bundle 4. The first piece 50 of sheet metal has at least one convexity 51 which places in communication some tubes of said tube bundle 4. Advantageously, the first piece 50 of sheet metal has a plurality of convexities 51, each of which places in communication different tubes of said tube bundle 4.

Advantageously, the first plate 23 comprises fins 26a which are deformable in order to hook onto the first manifold means 5, attaching them to itself.

Advantageously, said assembly comprises second manifold means 6, said second plate 24 being interposed between said second manifold means 6 and said space 20.

Said second manifold means 6 expediently comprise a second piece 60 of sheet metal. Said second manifold means 6 make it possible to place in communication with one another at least some tubes of said tube bundle 4. The second piece 60 of sheet metal has at least one convexity 61 which places in communication some tubes of said tube bundle 4. Advantageously, the second piece 60 of sheet metal has a plurality of convexities 61 each of which places in communication different tubes of said tube bundle 4.

Advantageously, the second plate 24 comprises fins 26b that are deformable in order to hook onto the second manifold means 6, attaching them to itself.

Advantageously, the web 25 comprises at least a first lateral edge 251 which extends between the second and the fourth side 32, 34. The first lateral edge 251 abuts the first plate 23. Similarly, the web 25 comprises at least a second lateral edge 252 which extends between the second and the fourth side 32, 34 and which abuts the second plate 24. The first and the second lateral edge 251, 252 extend parallel and on opposite sides of the web 25.

In a first constructional solution, at least the web 25 is made of aluminium or aluminium alloy and is coated with a brazing substance.

In a second constructional solution at least the first and the second plate 23, 24 are made of aluminium or aluminium alloy and coated with a brazing substance.

Advantageously, the first and the second plate 23, 24 and the web 25 are made of aluminium or aluminium alloy. This permits lightness of the product. Preferably, the first and the second plate 23, 24 and the web 25 are made of aluminium or aluminium alloy and coated with a brazing substance.

Also the first and the second manifold means 5, 6 are expediently made of aluminium or aluminium alloy, preferably coated with a brazing substance.

In the preferred solution, a plurality of the tubes of the tube bundle 4 is also made of aluminium or aluminium alloy.

Also a subject of the present invention is a heat exchanger obtained from the assembly 1 having one or more of the technical features described previously, or hereinafter. At least the first and the second side 31, 32 of said opening 32 are irremovably connected to each other by means of said brazing substance.

Advantageously, the sides of said opening 22 are irremovably connected to one another by means of said brazing substance. In the preferred solution, the assembly according to the present invention is brazed with the frame 21 facing downwards so as to allow the brazing substance to flow by gravity towards the frame 21. The frame 21 is in fact a particularly critical zone in which gaps must be avoided at all costs.

Advantageously, said exchanger 1 comprises means for evacuation of the fumes present in said space 20; said fume evacuation means comprise a pipe which is connected to said space 20 in an interface zone which is located in the lower portion of the exchanger 1 (normally) opposed to said access opening 21. The pipe, starting from the interface zone, extends upwards.

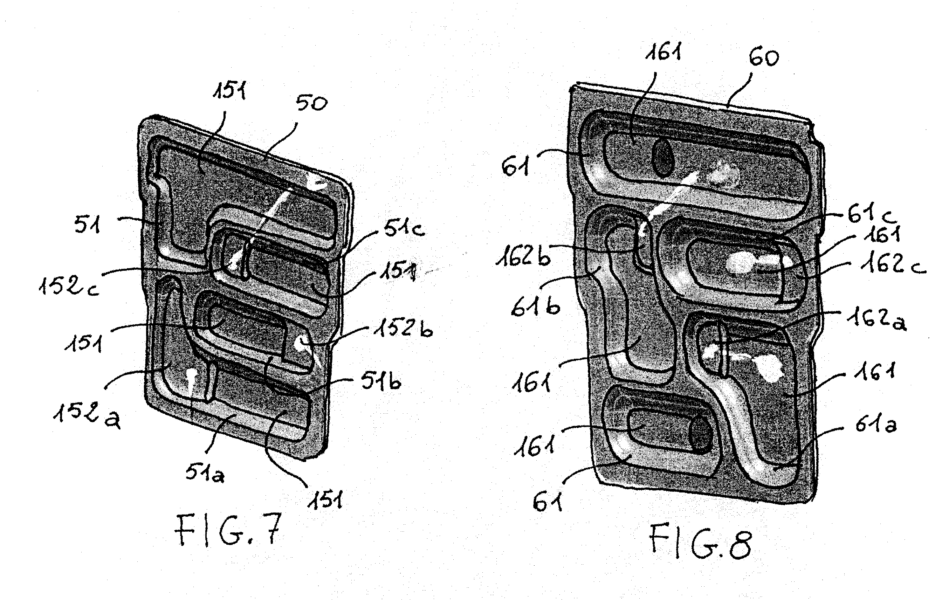

Figure 7 shows on an enlarged scale the first sheet 50 which, coupled to the first plate 23, contributes to forming the first manifold means 5. As is clearly visible in the drawing, the convexities 51, which place in communication with one another some tubes of the tube bundle 4 and allow the flow of water to change direction at the header formed by the first manifold means 5, each have a greater depression 151. Some selected convexities 151a, 151b, 151c (collectively designated by the number 151) each have a respective zone with reduced depression 152a, 152b, 152c (collectively designated by the number 152), which substantially forms a passage of reduced cross-section for the water which flows within the specific tubes 4 which open out in the region of the zones with reduced depression 152.

Figure 8 shows on an enlarged scale the second sheet 60 which, coupled to the second plate 24, contributes to forming the second manifold means 6. As is clearly visible in the drawing, and similarly to what has been described above with reference to Figure 7, the convexities 61 which place in communication with one another some tubes of the tube bundle 4 each have a greater depression 161. Some selected convexities 161a, 161b, 161c (collectively designated by the number 161) each have a zone with reduced depression 162a, 162b, 162c (collectively designated by the number 162), which substantially forms a passage with reduced cross-section for the water which flows within the specific tubes 4 which open out in the region of the zones with reduced depression 162.

In the example of the drawings, a single zone with reduced depression 152, 162 is shown for each respective selected convexity 151, 161, but the principle may of course be generalised, and applied by a person skilled in the art who has understood the invention from reading the present description. Depending on the configurations of the convexities on the sheets 50, 60, which form the manifold zones and the connections in parallel between the tubes 4 of the tube bundle, the present invention may be modified and adapted in such a way as to have not only convexities of a different shape, but also having a plurality of reduced depressions, possibly with depths different from one another, for example in order to balance correctly the flow of water or other fluid which must pass through three or more tubes in parallel.

In the manufacture of the heat exchanger according to the present invention, the first and the second sheet 50, 60 are preferably constructed from a flat sheet of aluminium or an alloy thereof, preferably coated with a brazing substance at least on the surface intended to be coupled to the tube holding plate, in the assembled configuration of the exchanger. The flat sheets are subjected to plastic deformation, preferably by means of drawing, in order to obtain the respective convexities 51, 151, 61, 161 with the respective zones of greater depression 151, 161 and, in the case of the selected convexities 151, 161, with the respective zones of reduced depression 152, 162.

This simple but effective procedure makes it possible to obtain a flow of fluid to be heated which, in the operation of the exchanger mounted on a boiler, is substantially balanced in the tubes 4 connected by the same convexity 51, 151, 61, 161. The flow rate in the tubes 4 is distributed in a balanced manner according to the cross-section, greater or smaller, of the manifold passages which are created between the plates 23, 24 and the bases, respectively with greater depression 151, 161 and with reduced depression 152, 162 of the convexities on the header plates 50, 60.

The manufacture of the heat exchangers takes place as already stated previously. The heat exchanger assembly, preferably manufactured from aluminium or aluminium alloy onto which a layer of brazing material is applied, is placed - upside down, with the frame 21 downwards - in a furnace, at a temperature suitable for melting the layer of brazing material, but below the melting temperature of the aluminium or aluminium alloy. In this way, the brazing material which coats the walls of the assembly is distributed in order to connect and fill even the smallest cracks between the various elements forming the exchanger, and in particular connects, covers and fills the joints between the elements in the region of the frame 21, so as to render the latter leaktight once the assembly has been extracted from the furnace and the brazing material has cooled and solidified.

With the present invention a perfect seal is obtained in the region of a zone subject to this problem. This advantage is in particular obtained also by constructing the casing by assembling pieces of sheet metal and not producing it in one piece, for example by means of a press.

A further important advantage is linked to the fact that in this way the efficiency of the exchanger is increased.

Naturally, the principle of the invention remaining the same, the embodiment and details of construction may be widely varied with respect to those described and illustrated, without thereby departing from the scope of the present invention.

## Claims

1. Semi-finished assembly for constructing a heat exchanger for boilers, comprising
- a tube bundle (4) for the passage of a fluid to be heated,
- a casing (2) which at least partly surrounds a space (20) in which the tube bundle (4) is placed and comprising a peripheral frame (21) defining an opening (22) for access to said space (20), said frame comprising a plurality of sides,
- said plurality of sides comprising at least a first and a second side (31, 32) which are adjacent and provided on separate bodies, **characterised in that**
- at least one of said at least first and second side (31, 32) being made of aluminium or aluminium alloy, with a coating of brazing substance.

2. Assembly according to claim 1, wherein the first side comprises a first protuberance (310) which is substantially in contact with and at least partly superimposed on the second side (32).

3. Assembly according to claim 1 or 2, wherein each pair of consecutive sides of said frame (21) comprises two sides provided on separate bodies.

4. Assembly according to any one of the preceding claims, wherein at least one side of said plurality of sides, in the region of two of its ends, is in contact with and superimposed with another two sides of said plurality of sides.

5. Assembly according to any one of claims 1 to 4, wherein said first protuberance (310) of the first side (31) extends away from the remaining parts of the first side (31) defining a first step (311), the elevation (312a) of said first step being abutted by the second side (32) and the tread (313a) of said first step (311) being in contact with the second side (32).

6. Assembly according to any one of claims 1 to 5, wherein the first side (31) comprises a second protuberance (314) which is in contact with and superimposed on another side of said plurality of sides.

7. Assembly according to claim 6, wherein at least one of the first and second protuberance (310, 314) of the first side extends transversely to the direction of predominant extension of the first side (31).

8. Assembly according to any one of the preceding claims, wherein said casing comprises:
- a first and a second plate (23, 24) which are opposed and between which said tube bundle (4) at least partly extends,
- a web (25) which connects the first and the second plate (23, 24), forming a concavity (250), and which in combination with the first and the second plate (23, 24) at least partly surrounds said space (20),
- said plurality of sides comprising the first, the second, a third and a fourth side (31, 32, 33, 34), two of the sides being provided on opposite ends of said web (25) and being opposed to each other, the other two sides being integral respectively with the first and the second plate (23, 24).

9. Assembly according to claim 7 or 8, when directly or indirectly dependent on claim 6, wherein the second protuberance (314) of the first side (31) extends cantilevered from the remaining parts of the first side (31), defining a second step (315), the elevation (312b) of said second step (315) being abutted by the fourth side (34), the tread (313b) of said second step (315) being in contact with the fourth side (34).

10. Assembly according to claim 8 or 9, wherein at least the first and the second plate (23, 24) and/or at least the web (25) are made of metal alloy coated with a brazing substance.

11. Assembly according to any one of the preceding claims, wherein the sides forming said frame (21) define in combination with one another a coplanar surface which surrounds the opening (22) and faces towards the outside of the assembly.

12. Heat exchanger obtained from the assembly according to any one of the preceding claims, wherein at least the first and the second side (31, 32) of said opening (22) are irremovably connected to each other by means of said brazing substance.

13. Heat exchanger according to claim 12, wherein the sides of said opening are irremovably connected to one another by means of said brazing substance.

14. Boiler comprising a heat exchanger according to claims 12 or 13.

## Patentansprüche

1. Halbfertige Anordnung zum Aufbau eines Wärmetauschers für Boiler, umfassend:
- ein Rohrbündel (4) für den Durchfluss einer Flüssigkeit, welche erhitzt werden soll,
- ein Gehäuse (2), das wenigstens teilweise einen Raum (20), in dem das Rohrbündel (4) angeordnet ist, umgibt und einen Umfangsrahmen (21) umfasst, welcher eine Öffnung (22) zum Zugang zu dem Raum (20) definiert, wobei der Rahmen eine Mehrzahl von Seiten umfasst, wobei
- die Mehrzahl von Seiten wenigstens eine erste und eine zweite Seite (31, 32) umfasst, die benachbart zueinander sind und an getrennten Körpern vorgesehen sind,
**dadurch gekennzeichnet, dass**
- wenigstens eine der wenigstens ersten und zweiten Seite (31, 32) aus Aluminium oder einer Aluminiumlegierung mit einer Lötsubstanzbeschichtung hergestellt ist.

2. Anordnung nach Anspruch 1, wobei die erste Seite einen ersten Vorspruch (310) umfasst, der im Wesentlichen mit Kontakt mit der zweiten Seite (32) steht und dieser überlagert ist.

3. Anordnung nach einem der Ansprüche 1 oder 2, wobei jedes Paar aufeinanderfolgender Seiten des Rahmens (21) zwei auf getrennten Körpern vorgesehenen Seiten umfasst.

4. Anordnung nach einem der voranstehenden Ansprüche, wobei wenigstens eine Seite der Mehrzahl von Seiten im Bereich zweier seiner Enden im Kontakt steht mit und überlagert ist mit den anderen zwei Seiten der Mehrzahl von Seiten.

5. Anordnung nach einem der Ansprüche 1 bis 4, wobei sich der erste Vorsprung (310) der ersten Seite (31) weg von den verbleibenden Teilen der ersten Seite (31) erstreckt und eine erste Stufe (311) definiert, wobei sich an die Erhebung (312) der ersten Stufe die zweite Seite (32) anschließt und das Profil (313a) der ersten Stufe (311) in Kontakt mit der zweiten Seite (32) steht.

6. Anordnung nach einem der Ansprüche 1 bis 5, wobei die erste Seite (31) einen zweiten Vorsprung (314) umfasst, der in Kontakt steht mit und überlagert ist an einer anderen Seite der Mehrzahl von Seiten.

7. Anordnung nach Anspruch 6, wobei sich wenigstens einer des ersten und zweiten Vorsprungs (310, 314) der ersten Seite schräg in Richtung der vorherrschenden Ausbreitung der ersten Seite (31) erstreckt.

8. Anordnung nach einem der voranstehenden Ansprüche, wobei das Gehäuse umfasst:
- eine erste und eine zweite Platte (23, 24), welche sich gegenüber liegen zwischen denen sich das Rohrbündel (4) wenigstens teilweise erstreckt,
- ein Steg (25), der die erste und zweite Platte (23, 24) verbindet und eine Wölbung (250) bildet und welcher in Kombination mit der ersten und der zweiten Platte (23, 24) wenigstens teilweise den Raum (20) umgibt,
- die Mehrzahl von Seiten, welche die erste, die zweite, eine dritte und eine vierte Seite (31, 32, 33, 34) umfasst, wobei zwei der Seiten auf gegenüberliegenden Enden des Stegs (25) vorgesehen sind und sich gegenüberliegen, und wobei die anderen zwei Seiten jeweils integriert mit der ersten und zweiten Platte (23, 24) sind.

9. Anordnung nach Anspruch 7 oder 8, und direkt oder indirekt abhängig von Anspruch 6, wobei sich der zweite Vorsprung (314) der ersten Seite (31) von den verbleibenden Teilen der ersten Seite (31) freitragend erstreckt und eine zweite Stufe (315) definiert, wobei sich die Erhebung (312b) der zweiten Stufe (315) an die vierte Seite (34) anschließt, wobei das Profil (313b) der zweiten Stufe (315) in Kontakt mit der vierten Seite steht.

10. Anordnung nach Anspruch 8 oder 9, wobei wenigstens die erste und die zweite Platte (23, 24) und/oder wenigstens der Steg (25) aus einer mit Lötsubstanz beschichteten Metalllegierung hergestellt ist.

11. Anordnung nach einem der voranstehenden Ansprüche, wobei die den Rahmen (21) bildenden Seiten in Kombination miteinander eine komplanare Fläche definieren, welche die Öffnung (22) umgibt und in Richtung des Äußeren der Anordnung gerichtet ist.

12. Von der Anordnung nach einem der voranstehenden Ansprüche erhaltener Wärmetauscher, wobei wenigstens die erste und die zweite Seite (31, 32) der Öffnung (22) mit Hilfe der Lötsubstanz unlösbar miteinander verbunden sind.

13. Wärmetauscher nach Anspruch 12, wobei die Seiten der Öffnung mit Hilfe der Lötsubstanz unlösbar miteinander verbunden sind.

14. Boiler, umfassend einen Wärmetauscher nach einem der Ansprüche 12 oder 13.

## Revendications

1. Ensemble semi-fini destiné à la construction d'un échangeur de chaleur pour chaudières, comprenant
- un faisceau de tubes (4) permettant le passage d'un fluide à chauffer,
- un boîtier (2) qui entoure au moins partiellement un espace (20) dans lequel le faisceau de tubes (4) est placé et comprenant un cadre périphérique (21) définissant une ouverture (22) permettant l'accès audit espace (20), ledit cadre comprenant une pluralité de côtés,
- ladite pluralité de côtés comprenant au moins un premier et un deuxième côté (31, 32) qui sont adjacents et montés sur des corps séparés,
**caractérisé en ce que**
- au moins un desdits au moins premier et deuxième côtés (31, 32) étant constitués d'aluminium ou d'un alliage d'aluminium, avec un revêtement à base d'une substance de brassage.

2. Ensemble selon la revendication 1, dans lequel le premier côté comprend une première protubérance (310) qui est sensiblement en contact avec et superposée au moins partiellement sur le deuxième côté (32).

3. Ensemble selon la revendication 1 ou la revendication 2, dans lequel chaque paire de côtés consécutifs dudit cadre (21) comprend deux côtés montés sur des corps séparés.

4. Ensemble selon l'une quelconque des revendications précédentes, dans lequel au moins un côté de ladite pluralité de côtés, dans la région de deux de ses extrémités, est en contact avec et superposé avec deux autres côtés de ladite pluralité de côtés.

5. Ensemble selon l'une quelconque des revendications 1 à 4, dans lequel ladite première protubérance (310) du premier côté (31) s'étend en s'éloignant des parties restantes du premier côté (31) définissant une première marche (311), l'élévation (312a) de ladite première marche étant jouxtée par le deuxième côté (32) et le pas (313a) de ladite première marche (311) étant en contact avec le deuxième côté (32).

6. Ensemble selon l'une quelconque des revendications 1 à 5, dans lequel le premier côté (31) comprend une seconde protubérance (314) qui est en contact avec et superposée sur un autre côté de ladite pluralité de côtés.

7. Ensemble selon la revendication 6, dans lequel au moins une de la première et de la seconde protubérance (310, 314) du premier côté s'étend de manière transversale à la direction de l'extension prédominante du premier côté (31).

8. Ensemble selon l'une quelconque des revendications précédentes dans lequel ledit boîtier comprend :
- une première et une seconde plaque (23, 24) qui s'opposent et entre lesquelles s'étend au moins partiellement ledit faisceau de tubes (4),
- un réseau (25) qui relie la première et la seconde plaque (23, 24), formant une concavité (250), et qui en combinaison avec la première et la seconde plaque (23, 24) entoure au moins partiellement ledit espace (20),
- ladite pluralité de côtés comprenant le premier, le deuxième, un troisième et un quatrième côté (31, 32, 33, 34), deux des côtés étant montés sur des extrémités opposées dudit réseau (25) et étant à l'opposé l'un par rapport à l'autre, les deux autres côtés faisant respectivement partie intégrante de la première et de la seconde plaque (23, 24).

9. Ensemble selon la revendication 7 ou la revendication 8, lorsque directement ou indirectement dépendant de la revendication 6, dans lequel la seconde protubérance (314) du premier côté (31) s'étend en porte-à-faux à partir des parties restantes du premier côté (31), définissant une seconde marche (315), l'élévation (312b) de ladite seconde marche (315) étant jouxtée par le quatrième côté (34), le pas (313b) de ladite seconde marche (315) étant en contact avec le quatrième côté (34).

10. Ensemble selon la revendication 8 ou la revendication 9, dans lequel au moins la première et la seconde plaque (23, 24) et/ou au moins le réseau (25) sont constitués d'un alliage métallique recouvert d'une substance de brassage.

11. Ensemble selon l'une quelconque des revendications précédentes, dans lequel les côtés formant ledit cadre (21) définissent en combinaison l'un avec l'autre une surface coplanaire qui entoure l'ouverture (22) et qui est dirigée vers l'extérieur de l'ensemble.

12. Échangeur de chaleur obtenu à partir de l'ensemble selon l'une quelconque des revendications précédentes, dans lequel au moins le premier et le deuxième côté (31, 32) de ladite ouverture (22) sont reliés l'un à l'autre de manière inamovible au moyen de ladite substance de brassage.

13. Échangeur de chaleur selon la revendication 12, dans lequel les côtés de ladite ouverture sont reliés l'un à l'autre de manière inamovible au moyen de ladite substance de brassage.

14. Chaudière comprenant un échangeur de chaleur selon les revendications 12 ou 13.
